# NOUVEAU FASCICULE DE BREVET EUROPEEN

(11) **EP 2 694 306 B2**
(45) Date de publication et mention de la décision concernant l'opposition: **24.02.2021**
(45) Mention de la délivrance du brevet: 05.11.2014
(21) Numéro de dépôt: 12713657.0
(22) Date de dépôt: 28.03.2012
(51) Int. Cl.: B60J 7/02

(54) **PAVILLON VITRE A PANNEAU MOBILE COULISSANT ET ENTREBAILLANT**
GLASDACH MIT VERSCHIEBBARER UND SCHWENKBARER MOBILER PLATTE
GLASS ROOF HAVING A SLIDING AND TILTING MOBILE PANEL

(30) Priorité: 04.04.2011 FR 1152894
(43) Date de publication de la demande: 12.02.2014
(73) Titulaire: Advanced Comfort Systems France SAS - ACS France, 79302 Bressuire Cedex (FR)
(72) Inventeur: DESBOIS, Mickaël, F-79200 Parthenay (FR)
(74) Mandataire: Vidon Brevets & Stratégie
(86) Numéro de dépôt international: PCT/EP2012/055525
(87) Numéro de publication internationale: WO 2012/136540

(56) Documents cités:
- EP-A1- 1 403 113
- DE-A1-102005 032 437
- DE-A1-102006 062 543
- DE-A1-102007 004 258
- DE-U1- 20 309 889
- FR-A1- 2 917 337
- US-A- 5 069 501
- US-A- 5 154 482
- US-B2- 6 454 347

## Description

### 1. Domaine de l'invention

Le domaine de l'invention est celui des baies vitrées pour véhicules automobiles, et plus précisément pour les pavillons de tels véhicules.

Plus précisément, l'invention concerne de tels dispositifs d'obturation comprenant au moins une ouverture coopérant avec un panneau vitré mobile coulissant, et en particulier des dispositifs connus sous le nom « baie flush », conçus pour être montés de façon affleurante avec la carrosserie.

Dans le cadre de la présente demande de brevet, on entend par le terme « panneau vitré » tout panneau, fixe ou mobile par rapport à la carrosserie, substantiellement transparent ou translucide, participant au clair de baie. Un tel panneau peut être réalisé en verre ou en tout matériau adapté, tel que le polycarbonate.

Dans certains modes de réalisation, le panneau peut être constitué de plusieurs éléments affleurants, vu de l'extérieur. Le cas échéant au moins un de ces éléments peut être opaque et par exemple en métal ou en plastique. Par ailleurs, les bords d'un panneau vitré peuvent être opacifiés, par exemple par sérigraphie.

Un dispositif selon l'invention peut en outre équiper une baie formée dans une partie sensiblement horizontale autre que le pavillon du véhicule.

### 2. Techniques de l'art antérieur

Il est actuellement souhaité, en matière de véhicule automobile, de proposer de plus en plus de surface vitrée. En particulier, on a proposé des véhicules présentant un pavillon équipé d'un ou plusieurs éléments vitrés. Dans certains cas, l'intégralité du pavillon est en verre, ou en un matériau similaire laissant passer la lumière, et notamment les rayons du soleil.

Des solutions ont été également proposées pour dégager des ouvertures dans un tel pavillon, notamment pour pouvoir former un toit ouvrant.

Ainsi, une technique répandue pour libérer une ouverture dans le pavillon consiste à faire basculer une vitre mobile, montée sur un cadre, vers l'extérieur du véhicule autour d'un axe solidaire du pavillon pour libérer un passage entre la vitre et le cadre.

Une autre technique de toit ouvrant également utilisée consiste à rendre la vitre mobile coulissante, au-dessus ou au-dessous du pavillon, dans un plan sensiblement parallèle au plan du pavillon.

On a également proposé de combiner ces deux approches, pour permettre alternativement d'entrebâiller le panneau mobile, ou de libérer totalement l'ouverture dans le pavillon par escamotage du panneau mobile.

Un tel pavillon vitré est connu de DE 10 2007 004 258.

Un inconvénient de ces techniques connues est qu'elles nécessitent des moyens complexes pour contrôler les différents mouvements devant être appliqués au panneau mobile selon les cas :
- dégagement ou louvoiement, pour passer de la position fermée dans laquelle le panneau mobile se trouve dans le plan du panneau fixe du pavillon, à un plan parallèle permettant le coulissement ;
- coulissement, pour éloigner le panneau mobile de l'ouverture, et le ramener au-dessus de celle-ci ;
- basculement pour assurer l'entrebâillement.

Ces mouvements distincts supposent un nombre élevé de pièces mobiles, et donc un encombrement et un poids relativement importants, ainsi qu'un assemblage, un réglage et une maintenance relativement complexes (étant rappelé que, notamment, l'étanchéité en position fermée doit dans tous les cas être assurée de façon efficace).

La motorisation de ces différents déplacements est également complexe.

L'encombrement et la complexité de ces moyens est un inconvénient d'autant plus important que le pavillon est vitré, puisqu'il faut alors dissimuler, à l'aide de sérigraphie, les différentes pièces mécaniques, ce qui va à l'encontre de l'objectif de maximisation de la surface vitrée, ou clair de baie.

### 3. Objectifs de l'invention

L'invention a notamment pour objectif de pallier ces inconvénients de l'art antérieur.

Plus précisément, l'invention a pour objectif de fournir un dispositif vitré d'obturation d'une baie formée dans un véhicule automobile, et notamment un pavillon vitré, dans lequel le panneau mobile peut être entrebâillé ou déplacé en coulissement de façon simple, efficace et fiable.

Ainsi, un objectif de l'invention est de fournir une technique permettant d'assurer l'entrebâillement et le coulissement à l'aide de moyens présentant un encombrement et un poids réduit, et un faible nombre de pièces.

Un autre objectif de l'invention est de fournir une telle technique, permettant un actionnement et une motorisation, au moins dans un certain mode de réalisation, qui soit particulièrement simple.

Encore un autre objectif de l'invention est de maximiser la surface vitrée, ou clair de baie.

### 4. Exposé de l'invention

Ces objectifs, ainsi que d'autres qui apparaîtront par la suite sont atteints à l'aide d'un pavillon vitré de véhicule automobile selon la revendication 1.

Ainsi, l'entrebâillement et le louvoiement du panneau mobile sont assurés de façon simple à l'aide d'un pion assurant l'entraînement des navettes dans les rails de guidage, le coulissement du panneau mobile étant aidé par un élément d'appui qui sert d'appui au panneau mobile sur une surface de guidage du rail, cette surface de guidage prenant la forme d'une bordure ou extension.

Avec un déplacement dans une seule direction des navettes, il est donc possible non seulement d'assurer l'ouverture et la fermeture du panneau mobile, par coulissement parallèlement au panneau fixe et mouvement pour venir dans le plan du panneau fixe, dans la position fermée, mais également une fonction d'entrebâillement du panneau mobile, à partir de cette position fermée.

Ce mécanisme permet des cinématiques complexes, pour le panneau mobile, à partir d'un déplacement simple, et donc aisément contrôlable et motorisable, des navettes, avec un nombre réduit d'éléments simples et peu coûteux.

En outre, le guidage du panneau mobile est effectué d'un seul côté des navettes, ce qui permet de maximiser le clair de baie.

On note que l'élément d'appui peut prendre la forme d'un pion, d'un patin, d'une roulette ou de deux pions par exemple.

La mise en œuvre d'une pièce de terminaison permet de façon simple d'assurer un mouvement de basculement et/ou un mouvement de louvoiement du panneau mobile.

Le basculement pour l'entrebâillement est mis en œuvre lorsque le pion se déplace dans la première et la deuxième portion de la piste ménagée dans le pièce de terminaison, le louvoiement étant mis en œuvre lorsque le pion se déplace dans la troisième et la quatrième portion de cette piste.

L'élément d'appui est conçu de sorte que lorsqu'il vient prendre appui sur la surface de guidage du rail, le coulissement du panneau mobile peut être mis en oeuvre, cet élément d'appui se désolidarisant de la surface de guidage du rail lors du louvoiement et de l'entrebâillement du panneau mobile.

Cet élément d'appui présente une longueur inférieure à celle du pion de façon à ne pas interférer avec la navette.

Dans un mode de réalisation particulier, la section dudit rail comprend trois zones parallèles à l'axe dudit rail, à savoir :
- une première zone dans laquelle ladite navette est guidée en translation,
- une deuxième zone dans laquelle ladite pièce de terminaison est placée, et
- une troisième zone dans laquelle l'élément d'appui se déplace et ladite surface d'appui s'étend.

Avantageusement, chacune desdites navettes porte une deuxième piste coopérant avec ledit pion solidaire dudit panneau mobile.

Dans ce cas, ladite deuxième piste présente une forme générale en « L ».

De façon avantageuse, ladite deuxième piste présente :
- une première extrémité, avec laquelle le pion est en butée, lors du mouvement de coulissement;
- une première portion, s'étendant transversalement par rapport à l'axe de déplacement de la navette, à partir de ladite première extrémité, et dans laquelle se déplace ledit pion lors du mouvement de louvoiement et lors de la fin du basculement ;
- une deuxième portion s'étendant parallèlement à l'axe de déplacement de la navette, à partir de ladite première portion, dans laquelle se trouve ledit pion dans ladite position d'obturation et lors du début du basculement ;
- une seconde extrémité formant butée pour ledit pion lorsque le panneau mobile est déplacé vers la position d'obturation.

Selon une mise en œuvre particulière, lesdits pions et éléments d'appui sont portés par un flasque relié audit panneau mobile au voisinage d'une première extrémité de ce dernier, dite extrémité distale, selon l'axe de déplacement desdites navettes.

De façon avantageuse, ledit panneau mobile est solidaire, au voisinage de sa seconde extrémité, dite extrémité proximale, de biellettes permettant de contrôler, complémentairement avec lesdits premiers pions, le basculement du panneau mobile.

L'invention concerne également les véhicules automobiles équipés d'un pavillon tel que décrit ci-dessus.

### 5. Liste des figures

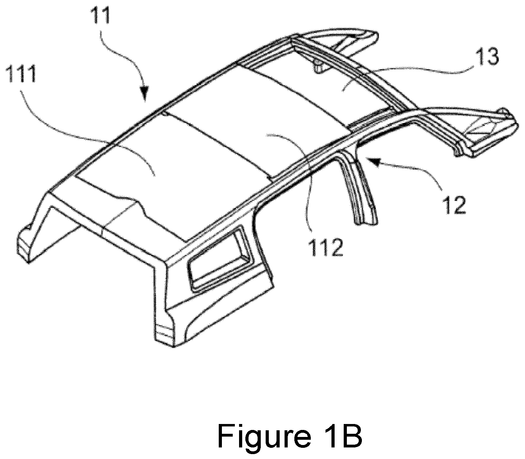

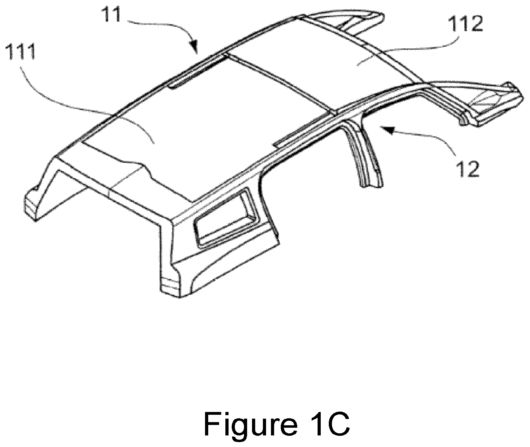

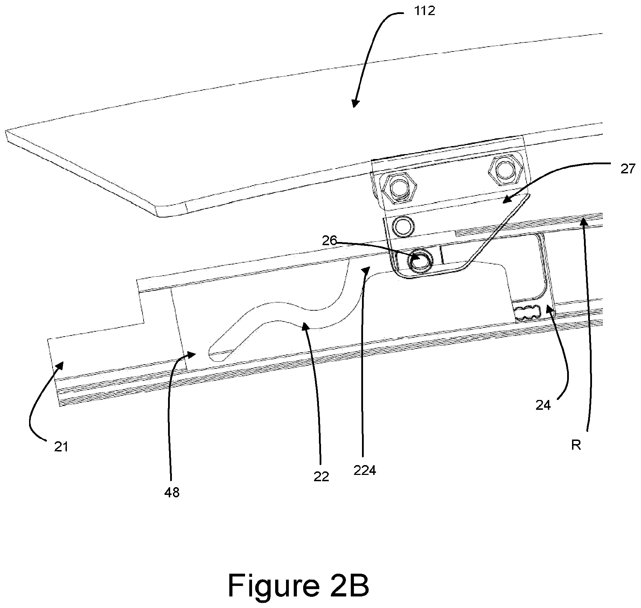

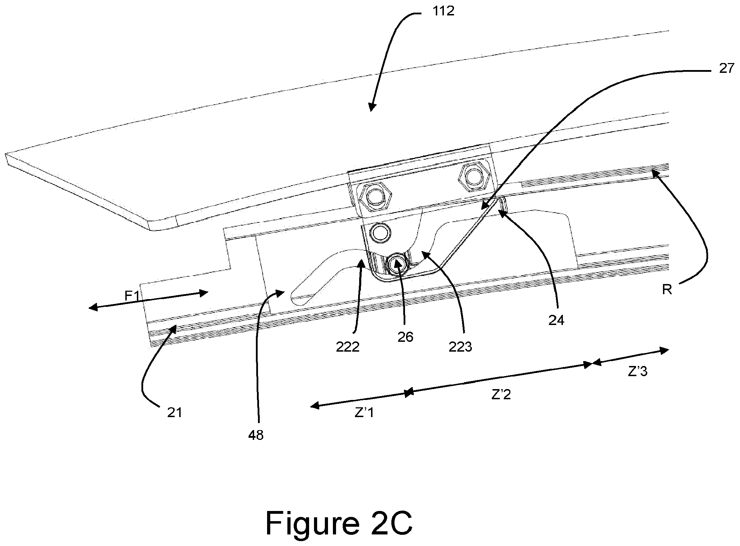

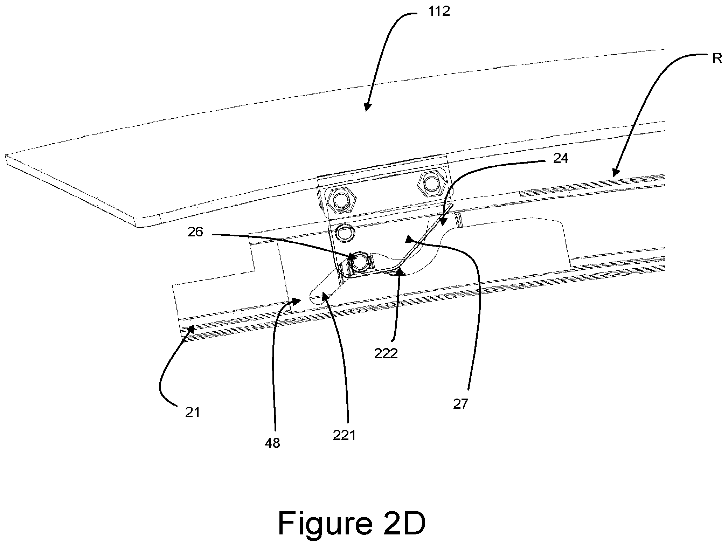

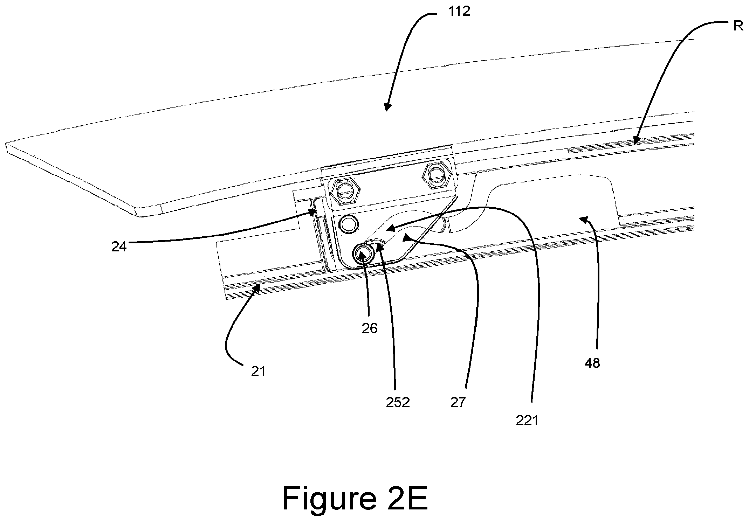

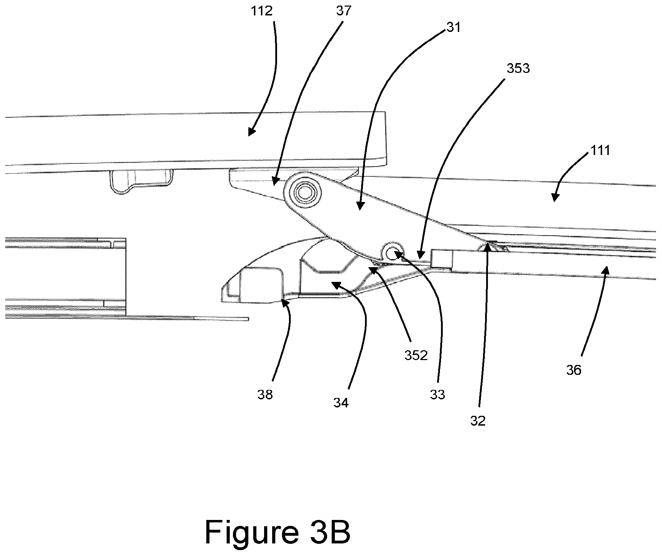

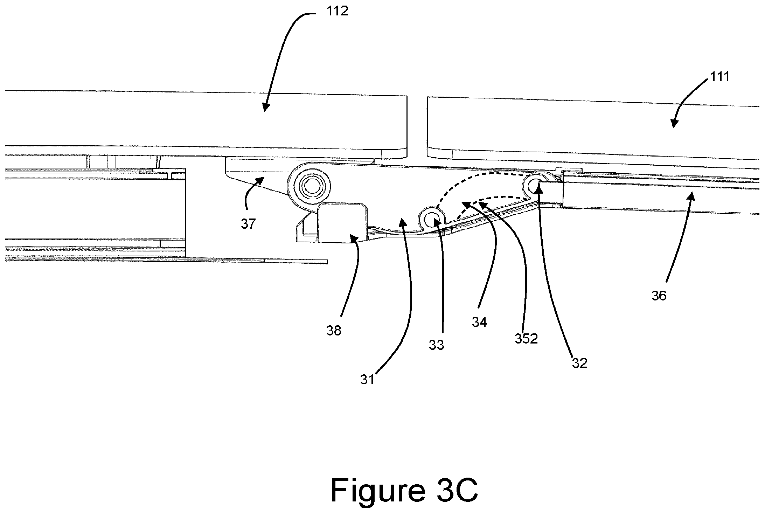

D'autres caractéristiques et avantages de l'invention apparaîtront plus clairement à la lecture de la description suivante d'un mode de réalisation particulier de l'invention, donné à titre de simple exemple illustratif et non limitatif et des dessins annexés, parmi lesquels :

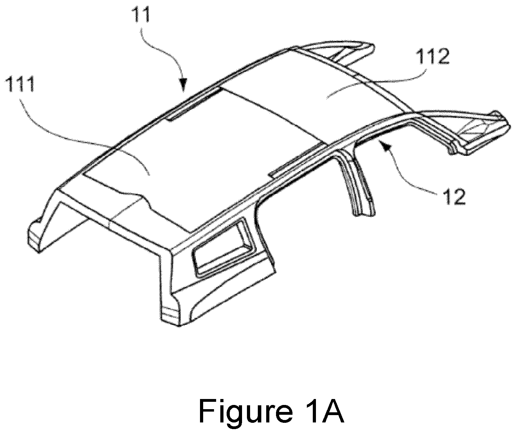

- les figures 1A à 1C illustrent la partie supérieure de la carrosserie d'un véhicule automobile, équipé d'un dispositif d'obturation, en l'occurrence un pavillon vitré, selon l'invention respectivement :
   ▪ figure 1A : panneau mobile en position fermée ;
   ▪ figure 1B : panneau mobile en position ouverte après coulissement ;
   ▪ figure 1C : panneau mobile en position entrebâillée ;

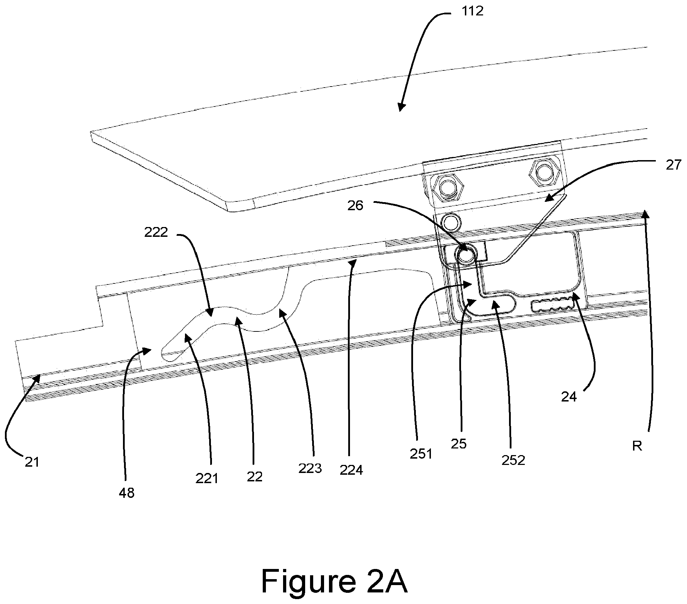

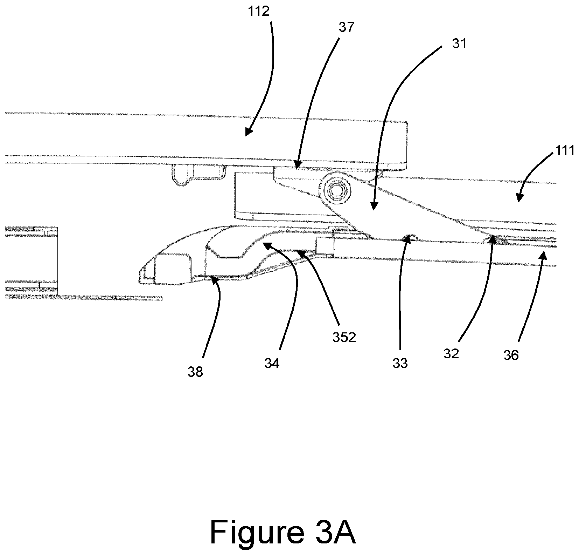

- les figures 2A à 2D et 3A à 3D illustrent respectivement, schématiquement, les moyens assurant la mobilité du panneau mobile d'une part à proximité de l'axe de basculement pour l'entrebâillement (figures 2A à 2E), c'est-à-dire selon les figures 1A à 1C du côté du panneau mobile orienté vers l'avant du véhicule (appelé par la suite extrémité distale), et d'autre part au voisinage du bord opposé (appelé par la suite extrémité proximale) (figures 3A à 3C) :
   ▪ figures 2A, 2B et 3A : le panneau mobile étant dans le plan de coulissement ;
   ▪ figures 2C et 3B : le panneau mobile étant en position entrebâillée ;
   ▪ figure 2D : le panneau mobile étant en cours de fermeture ou d'ouverture, en position de louvoiement ;
   ▪ figures 2E et 3C : le panneau mobile étant en position fermée, l'ouverture étant obturée ;
- les figures 4 et 5 sont respectivement une vue partielle en perspective et en coupe des moyens assurant la mobilité du panneau mobile à l'extrémité distale du véhicule, le panneau mobile étant dans le plan de coulissement ;
- la figure 6, 7 et 8 sont une vue en coupe, une vue partielle en perspective et une vue de dessus des moyens assurant la mobilité du panneau mobile à l'extrémité distale du véhicule, le panneau mobile étant en position fermée, l'ouverture étant obturée ;
- la figure 9 est une vue éclatée des moyens assurant la mobilité du panneau mobile à l'extrémité distale du véhicule.

### 6. Description détaillée d'un mode de réalisation de l'invention

L'invention concerne donc un dispositif d'obturation d'une baie d'un véhicule automobile, formé dans ou formant un pavillon vitré. Le mode de réalisation décrit ci-après concerne donc un pavillon vitré.

Comme illustré sur les figures 1A à 1C, le pavillon vitré est un ensemble 11 pré-assemblé comprenant :
- un panneau fixe 111, dont les bords sont dimensionnés pour être solidarisés aux bords correspondant de la carrosserie 12 du véhicule, ou de son châssis, dont seule la partie supérieure illustrée, par exemple par collage ;
- un panneau mobile 112, pouvant être déplacé par rapport au panneau fixe 111, pour obturer ou libérer une ouverture 13 définie à côté du panneau fixe 111 ;
- des moyens décrits plus en détail par la suite (rails, pions, pistes, biellettes, motorisation...) permettant de contrôler le déplacement du panneau mobile 112.

De façon connue, en vue de libérer l'ouverture 13, le panneau mobile 112 est apte à être déplacé vers l'arrière du véhicule par coulissement dans des rails solidaires de la partie fixe et situés de part et d'autre du panneau mobile.

Dans la position fermée illustrée par la figure 1A, le panneau mobile 112 se trouve dans le plan ou dans la continuité, du panneau fixe 111. Il obture de façon étanche, des joints d'étanchéité (non illustrés) étant prévus à cet effet, l'ouverture 13 ménagée dans le pavillon 11, et affleure avec le panneau fixe 111, ainsi que, dans ce mode de réalisation, avec le pare-brise du véhicule. Il peut également être affleurant avec une pièce ou élément transversal, par exemple une traverse.

Dans la position illustrée par la figure 1B, l'ouverture 13 est dégagée, le panneau mobile 112 ayant été déplacé par rapport au panneau fixe 111, et placé sensiblement parallèle à celui-ci à l'extérieur du véhicule.

De façon connue en soi, l'ouverture, à partir de la position illustrée par la figure 1A, se fait en deux temps : un dégagement du panneau mobile 112 au-dessus de l'ouverture 13, soit par un mouvement selon un axe perpendiculaire au plan défini par le panneau fixe 111, soit par un mouvement de louvoiement, puis un déplacement en translation, ou coulissement.

Il est à noter que les termes « plan », « parallèle » et « perpendiculaire » doivent être interprétés de façon large. En effet, comme il apparaît sur les figures, le pavillon 11 peut être sensiblement incurvé, dans une ou plusieurs directions. Dans ce cas, le « plan » doit être interprété comme étant la surface de référence (incurvée) définie par le pavillon.

Outre ce mouvement d'ouverture, on prévoit selon l'invention, que le panneau mobile 112 peut être basculé, autour d'un axe placé sensiblement dans le plan du panneau fixe 111, vers l'avant du véhicule, comme illustré par la figure 1C pour prendre une position entrebâillée.

Selon l'invention, ces différents mouvements du panneau mobile sont contrôlés à partir du déplacement de deux navettes, une de chaque côté du pavillon, mobiles selon une seule direction, le long et à l'intérieur de rails prévus à cet effet.
Les figures 2A à 3C illustrent plus précisément le fonctionnement du dispositif de l'invention, selon un mode de réalisation préférentiel.
Les figures 2A à 2E présentent schématiquement la partie du panneau mobile la plus proche de l'avant du véhicule, appelée extrémité distale, et l'un des rails correspondant (un second rail identique étant placé de l'autre côté du véhicule).
Les figures 3A à 3C présentent l'autre côté du panneau mobile, appelé extrémité proximale, et le rail correspondant.

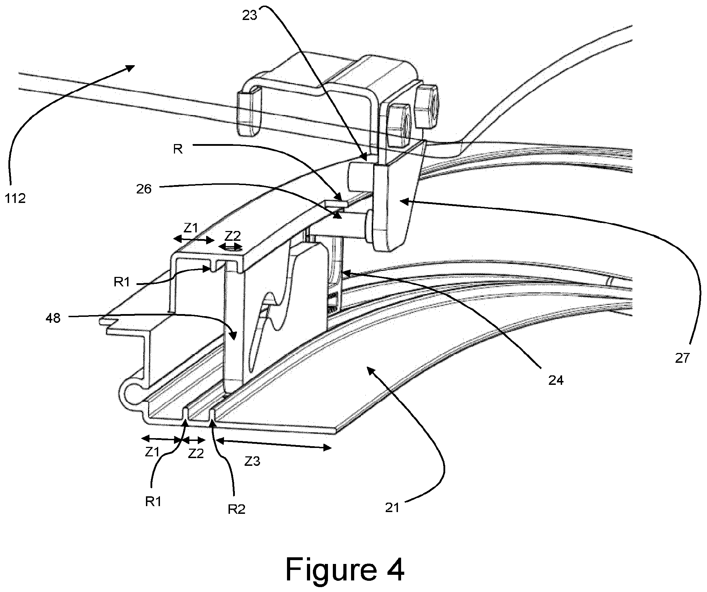

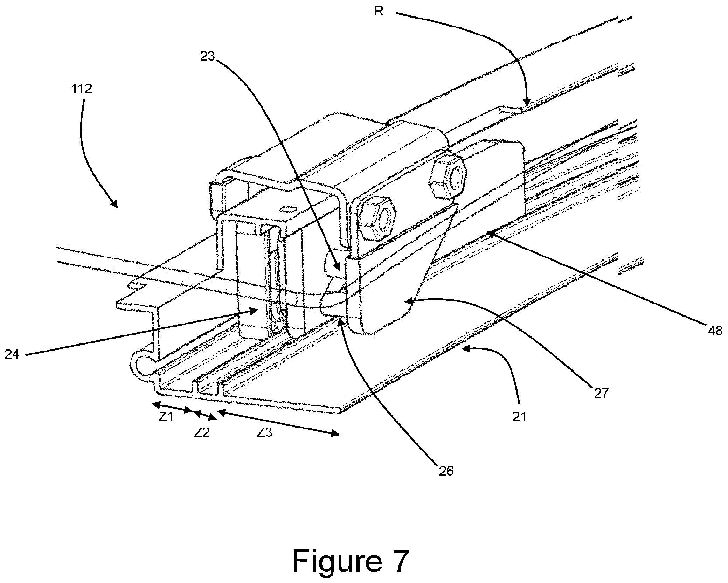

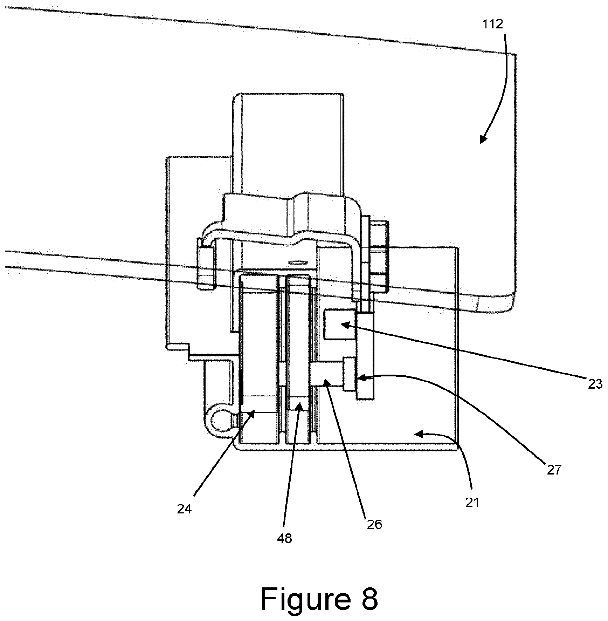

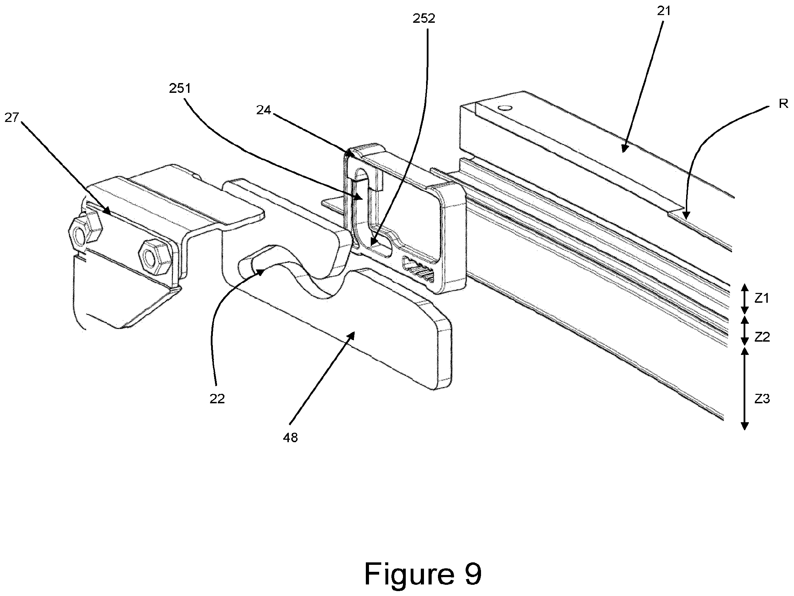

Dans le mode de réalisation illustré, le premier rail 21 présente une section en forme de « C » visible sur les figures 4 à 9. Les parties supérieure et inférieure du rail 21 comprennent deux zones Z1, Z2 parallèles à l'axe du rail 21 et qui sont délimitées par des rebords ou lèvres R1, R2 qui s'étendent sur la longueur du rail 21. La partie inférieure du rail comprend une troisième zone Z3 parallèle à l'axe du rail 21. Ces trois zones s'étendent sur la longueur du rail 21.

Une pièce de terminaison 48 (ou embout) est placée de manière fixe à l'extrémité du premier rail 21, dans la zone centrale, dite deuxième zone Z2. Une piste 22, dite première piste, qui comprend une forme de « S », est formée dans cette pièce 48, qui est par exemple en matière plastique (ce qui permet de définir, par exemple par moulage, la forme complexe de la piste 22). Cette piste 22 comprend quatre portions, à savoir une première portion 221 inclinée qui se prolonge par une deuxième portion 222 inclinée dans une direction opposée, la deuxième portion 222 se prolongeant par une troisième portion 223 inclinée dans la direction opposée à la deuxième portion 222, et la troisième portion 223 étant ouverte à l'une de ses extrémités et se prolongeant par une quatrième portion 224 parallèle à l'axe de déplacement de la navette 24.

Une navette 24 (ou coulisseau) est mobile en translation dans la première zone Z1 du rail 21. Cette première zone Z1 forme un canal de guidage en translation de la navette 24. Cette navette 24 porte une piste 25, dite deuxième piste, comprenant une première portion 251, s'étendant transversalement par rapport à l'axe de déplacement de la navette 24 et une deuxième portion 252 s'étendant parallèlement à l'axe de déplacement de la navette 24, à partir de la première portion 251. La piste 25 qui est en forme de « L » guide un premier pion 26 (ou axe ou doigt), dit pion d'entraînement du panneau mobile, solidaire du panneau mobile 112, par l'intermédiaire d'une pièce de liaison 27 (ou platine ou flasque). Cette pièce de liaison 27 porte un élément d'appui sous la forme d'un deuxième pion 23, dit pion d'appui ou de support du panneau mobile, qui est mis en oeuvre (ou « actif ») dans la position de coulissement des figures 2A et 2B (correspondants à la position de la figure 1B). Ce pion 23 est « inactif » en position d'entrebaillement, de louvoiement et fermée du panneau mobile.

Comme on le voit notamment sur les figures 4 à 8, le pion d'entraînement 26 s'étend sur les trois zones Z1 à Z3 du rail 21. Il coopère avec la première piste 22 de la pièce de terminaison 48 et la deuxième piste 25 de la navette 24. Le pion d'appui 23, de longueur inférieure au pion d'entraînement 26 s'étend, dans la troisième zone Z3 du rail de guidage 21 et ne coopère avec aucune des deux pistes 22,25.

Selon l'approche de l'invention, cette navette 24 se déplace dans une seule direction le long de la zone Z1 du rail 21 (flèche F1 de la figure 2C), ce déplacement permettant d'assurer les différents mouvements du panneau mobile 112, grâce aux différents pions 23, 26, aux différentes pistes 22, 25 et la mise en oeuvre d'un rebord R sur le rail 21.

Dans la position de coulissement du panneau mobile 112 (figure 2A), la navette 24 est déplacée dans le rail 21, le pion d'entraînement 26 étant situé dans la première portion 251 de la piste 25 de la navette 24, et plus précisément en butée d'une première extrémité de la première portion 251 (qui est perpendiculaire à l'axe du rail 21).

Toujours dans cette position de coulissement, le pion d'appui 23, dont la longueur est inférieure à celle du pion d'entraînement 26, est en contact avec un rebord R formé sur la partie supérieure du rail 21 et parallèle à l'axe du rail. La coopération du pion d'appui 23 et du rebord R aide au coulissement du panneau mobile 112, au-dessus du panneau fixe 111, pour libérer l'ouverture 13 ménagée dans le pavillon 12.

On note que le rebord R ne s'étend pas jusqu'à l'extrémité distale du rail 21 et que la pièce de terminaison 48 est placée dans le rail 21 de telle sorte que le rebord R chevauche la quatrième portion 224 de la piste 22, cette quatrième portion 224 étant parallèle à l'axe de déplacement de la navette 24.

La fermeture du panneau mobile 112 comprend tout d'abord un coulissement de la droite vers la gauche sur les figures 2A à 2E, pour ramener ce panneau mobile au voisinage de l'ouverture.

Ensuite, comme cela apparaît sur la figure 2B (position de coulissement), le pion 26 d'entraînement, qui est toujours en butée d'une première extrémité de la première portion 251 de la deuxième piste 25, coopère avec la quatrième portion de la première piste 22 de la pièce de terminaison 48. Dans le même temps, le deuxième pion 23 (qui n'est pas visible sur la figure 2B) est en appui sur le rebord R du rail 21. Dans la position illustrée sur la figure 2B, la pièce de terminaison 48 et la navette 24 se chevauchent sans être en contact.

A mesure que le panneau mobile 112 se déplace vers l'extrémité distale du véhicule, c'est-à-dire de la droite vers la gauche sur les figures 2A à 2E, la navette 24 se déplace parallèlement au rail 21 vers cette extrémité distale et le pion d'entraînement 26 est guidé en translation dans la troisième portion 223 de la piste 22 qui est inclinée par rapport à l'axe du rail 21. Du fait de sa forme, la troisième portion 223 entraîne le pion 26 vers le bas, par rapport à l'axe du rail 21 (figure 2C). Par conséquent, le pion 26 se déplace vers le bas, par rapport à l'axe du rail 21, dans la première portion 251 de la piste 25 de la navette 24. Dans le même temps, le pion d'appui 23 n'est plus en contact avec le rebord R du rail 21 (il est donc « inactif»).

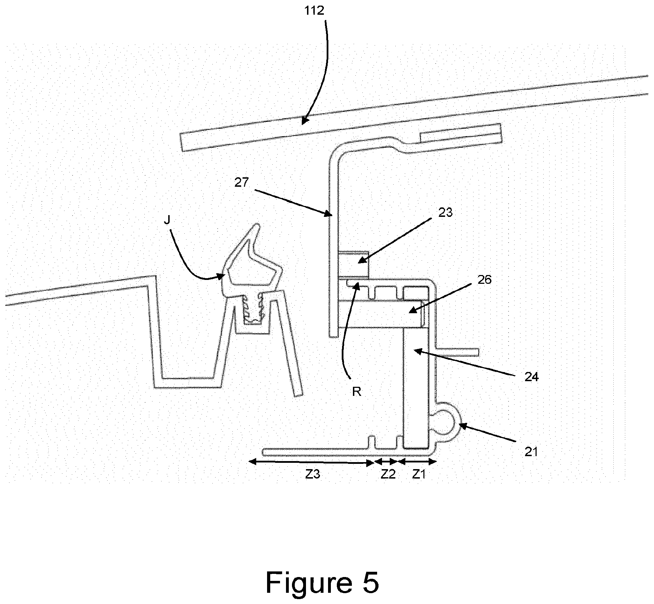

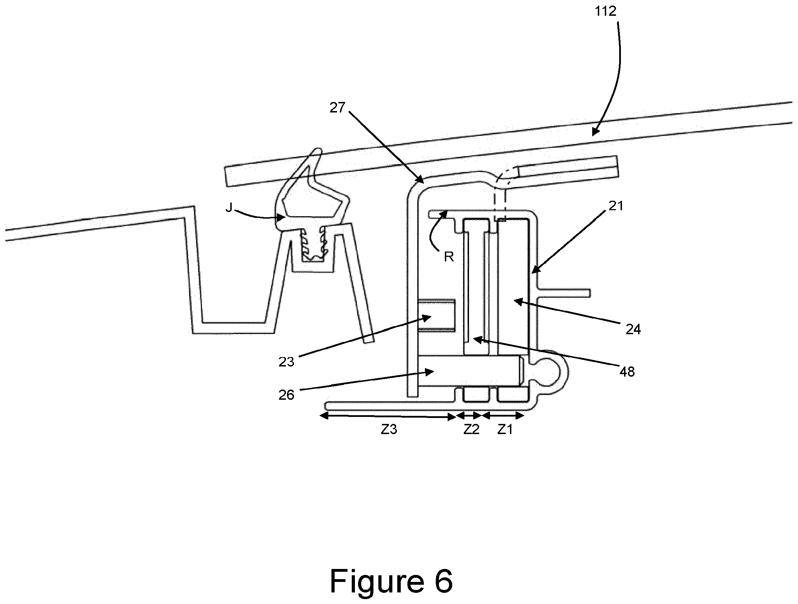

Ceci va entraîner l'abaissement de l'extrémité distale du panneau mobile (figure 2C), de façon qu'il vienne progressivement en appui contre le rebord ou le joint d'étanchéité J correspondant (visible sur les figures 5 et 6). En d'autres termes, ceci entraîne le basculement du panneau mobile.

Ainsi, par l'intermédiaire de son pion 26 qui se déplace dans la piste 22, la pièce de liaison 27, et en conséquence le panneau mobile 112, basculent légèrement pour prendre la position entrebâillée (figure 2C).

Sur la figure 2D, la navette 24 se déplace toujours parallèlement au rail 21 et le pion d'entraînement 26 est guidé en translation dans la deuxième portion 222 de la piste 22, qui entraîne le pion d'entraînement 26 vers le haut, par rapport à l'axe du rail 21. En outre, le pion d'entraînement 26 se déplace vers le haut, par rapport à l'axe du rail 21 dans la première portion 251 de la piste 25 de la navette 24.

Ceci va entraîner l'abaissement de l'extrémité proximale du panneau mobile 112 de sorte que le panneau mobile est parallèle à l'ouverture (figure 2D), et provoque une décompression du joint d'étanchéité J. Cette décompression du joint d' étanchéité permet de limiter les frottements et donc l'usure sur ce dernier.

La navette 24 se déplaçant toujours parallèlement au rail 21, la première portion 221 de la piste 22 entraîne le pion d'entraînement 26 vers le bas, par rapport à l'axe du rail 21, et la partie mobile 112 est abaissée. En outre, le pion d'entraînement 26 se déplace se déplace vers le bas, par rapport à l'axe du rail 21, dans la première portion 251 de la piste 25 puis de gauche à droite, parallèlement à l'axe du rail 21, dans la deuxième portion 252 de la piste 25 de la navette 24.

Lorsque le panneau mobile 112 est complètement fermé (figures 2E, 7 et 8), le pion d'entraînement 26 se trouve en butée de l'extrémité fermée de la piste 22 de la pièce de terminaison 48 et dans la deuxième portion 252 de la piste 25 de la navette 4. Dans le même temps, le pion d'appui 23 n'est en contact avec aucune autre pièce (il est « inactif »).

Pour obtenir l'entrebâillement à partir de cette position fermée de la figure 2E, on déplace la navette 24 dans le rail 21 de gauche à droite. Ceci est illustré par les figures 2D et 2C.

On constate donc que, avec un mouvement de la navette 24 dans une seule direction (parallèlement au rail), qui peut être aisément motorisé, par exemple à l'aide d'un câble « push/pull », les différents mouvements du panneau mobile 112 peuvent être contrôlés. Dans une première zone Z'1 (figure 2C), ce déplacement de la navette contrôle l'entrebâillement. Dans une seconde zone Z'2, il contrôle l'ouverture (louvoiement et coulissement). Dans une troisième zone Z'3, il contrôle le coulissement.

Dans le même temps, l'autre extrémité, ou extrémité proximale, du panneau mobile 112 doit également être guidée, de façon liée au mouvement de la navette. Comme illustré par les figures 3A à 3C, dans ce mode de réalisation, ceci est assuré à l'aide d'une biellette 31 dont le déplacement est contrôlé par l'intermédiaire d'un troisième pion 32 et d'un quatrième pion 33, circulant dans une piste 34 formée dans un deuxième rail 36, ou au moins à l'extrémité de ce rail.

Dans le mode de réalisation illustré, une pièce de terminaison 38 est placée à l'extrémité du rail 36. L'extrémité de la piste 34 est formée dans cette pièce 38, par exemple en matière plastique (ce qui permet de définir, par exemple par moulage, la forme complexe de la piste). L'extrémité de la piste 34 peut également être formée directement dans le rail 36.

L'autre extrémité de la biellette 31 est montée mobile en rotation sur une pièce de liaison 37 reliée au panneau mobile 112.

Sur la figure 3A, le panneau mobile est pratiquement dans la position de coulissement. Dans cette position, les troisième et quatrième pions 32 et 33 se trouvent dans une portion rectiligne 353 de la piste 34 parallèle à l'axe du rail 36. En d'autres termes, les pions 32 et 33 sont alignés selon un axe sensiblement parallèle à l'axe du rail 36. La biellette 31 est donc maintenue avec une inclinaison constante, choisie de façon que le panneau mobile 112 soit sensiblement parallèle au panneau fixe 111.

Lorsque le panneau mobile 112 est dans sa position fermée, illustrée par la figure 3C, le quatrième pion 33 se déplace dans une portion inclinée 352 de la piste 34, vers le bas, alors que le troisième pion 32 se déplace dans la portion rectiligne 353 de la piste 34, vers la gauche. De ce fait, la biellette 31 tend à se rabaisser, et à s'aligner sensiblement avec l'axe du rail 36. Ceci entraîne l'abaissement de la pièce de liaison 37, et donc de l'extrémité proximale du panneau mobile 112, qui vient se placer en affleurement avec le panneau fixe 111.

Lorsque la navette 24 est déplacée dans la position d'entrebâillement (figure 2C) un basculement est appliqué au panneau mobile 112, entraînant la surélévation par rapport à la partie fixe de l'extrémité proximale du panneau mobile 112. Ceci entraîne la biellette 31 qui se redresse (figure 3B), le quatrième pion 33 se déplaçant dans la portion inclinée 352 de la piste 34, vers le haut, alors que le troisième pion 32 se déplace dans la portion rectiligne 353 de la piste 34, vers la droite. Le panneau mobile est ainsi maintenu dans la position entrebâillée.

Bien sûr, le déplacement de la navette 24 dans l'autre sens, dans la zone Z'1 (figure 2C), entraîne à nouveau la fermeture du panneau mobile.

Dans le mode de réalisation illustré, le panneau mobile vient prendre position à côté de la partie fixe, pour former le pavillon vitré (dans la position d'obturation).

Dans d'autres modes de réalisation, la partie fixe peut présenter un contour correspondant au contour du pavillon, l'ouverture étant alors définie dans cette partie fixe.

## Revendications

1. Pavillon vitré de véhicule automobile, comprenant une partie fixe (111) et un panneau mobile (112) par rapport à la partie fixe (111), apte à obturer une ouverture (13) formée dans ou à côté de ladite partie fixe (111), dans une position d'obturation,
le déplacement dudit panneau mobile (112) étant mis en œuvre à l'aide de deux navettes (24) guidées en translation respectivement dans deux rails (21), chacune desdites navettes (24) coopérant avec un pion (26) solidaire dudit panneau mobile (112),
ledit panneau mobile (112) portant deux éléments d'appui (23) prenant appui sur des surfaces d'appui (R) formées respectivement sur une portion longitudinale desdits rails (21) définissant une troisième zone de déplacement dans laquelle ledit panneau mobile (112) est déplacé en coulissement par rapport à ladite partie fixe (111), parallèlement aux rails (21),
ladite surface d'appui (R) étant interrompue dans une portion d'extrémité de chacun desdits rails (21), de façon à permettre un déplacement desdits éléments d'appui (23) dans une direction perpendiculaire auxdits rails (21).
lesdites portions d'extrémité étant munies d'une pièce de terminaison (48) qui porte une première piste (22) configurée de façon à assurer, lorsque les navettes (24) sont déplacés dans lesdits rails (21) un mouvement de basculement et/ou un mouvement de louvoiement dudit panneau mobile (112),
ladite première piste (22) présentant une forme en « S » définissant trois portions (221, 222, 223) inclinées par rapport à l'axe de déplacement de ladite navette (24),
le déplacement desdites navettes (24) dans lesdites portions d'extrémité assurant :
- dans une première zone de déplacement (Z'1), un mouvement de basculement dudit panneau mobile (112) par rapport à ladite partie fixe (111), lorsque ledit pion (26) se déplace dans une première portion (221) et une deuxième portion (222) de ladite première piste (22), et
- dans une deuxième zone de déplacement (Z'2), un mouvement de louvoiement dudit panneau mobile (112), lorsque ledit pion (26) se déplace dans une troisième portion (223) et une quatrième portion (224) de ladite première piste (22),
**caractérisé en ce que** ladite première piste (22) est ouverte à l'une de ses extrémités, de façon à se désolidariser du pion (26) lors du passage dans ladite troisième zone, et **en ce que** le pion (26) présente une longueur supérieure à celle dudit élément d'appui (23).

2. Pavillon vitré selon la revendication 1, **caractérisé en ce que** chacune desdites navettes (24) porte une deuxième piste (25) coopérant avec ledit pion (26) solidaire dudit panneau mobile (112).

3. Pavillon vitré selon la revendication 2, **caractérisé en ce que** ladite deuxième piste (25) présente une forme générale en « L ».

4. Pavillon vitré selon l'une quelconque des revendications 1 à 3, **caractérisé en ce que** lesdits pions et éléments d'appui sont portés par un flasque (27) relié audit panneau mobile (112) au voisinage d'une première extrémité de ce dernier, dite extrémité distale, selon l'axe de déplacement desdites navettes (24).

5. Pavillon vitré selon l'une quelconque des revendications 1 à 4, **caractérisé en ce que** ledit panneau mobile (112) est solidaire, au voisinage de sa seconde extrémité, dite extrémité proximale, de biellettes (31) permettant de contrôler, complémentairement avec lesdits premiers pions (26), le basculement du panneau mobile (112).

6. Véhicule automobile comprenant un pavillon vitré selon l'une quelconque des revendications 1 à 5.

## Patentansprüche

1. Glasdach eines Kraftfahrzeugs, welches einen festen Teil (111) und eine bezüglich des festen Teils (111) bewegliche Platte (112), die geeignet ist, in einer Verschlussposition eine in oder neben dem festen Teil (111) ausgebildete Öffnung (13) zu verschließen, umfasst,
wobei die Verschiebung der beweglichen Platte (112) mithilfe von zwei Gleitstücken (24) durchgeführt wird, die in jeweils einer von zwei Schienen (21) translatorisch geführt werden, wobei jedes dieser Gleitstücke (24) mit einem Stift (26) zusammenwirkt, der mit der beweglichen Platte (112) fest verbunden ist,
wobei die bewegliche Platte (112) zwei Stützelemente (23) trägt, die sich auf Stützflächen (R) stützen, die jeweils an einem Längsabschnitt der Schienen (21) ausgebildet sind, der einen dritten Verschiebungsbereich definiert, in welchem die bewegliche Platte (112) bezüglich des festen Teils (111) parallel zu den Schienen (21) gleitend verschoben wird,
wobei die Stützfläche (R) in einem Endabschnitt jeder der Schienen (21) unterbrochen ist, so dass eine Verschiebung der Stützelemente (23) in einer zu den Schienen (21) senkrechten Richtung ermöglicht wird, wobei die Endabschnitte mit einem Abschlussstück (48) versehen sind, welches eine erste Bahn (22) trägt, die dafür ausgebildet ist, wenn die Gleitstücke (24) in den Schienen (21) verschoben werden, eine Schwenkbewegung und/oder eine Ausstellbewegung der beweglichen Platte (112) sicherzustellen,
wobei die erste Bahn (22) eine "S"-Form aufweist, welche drei Abschnitte (221, 222, 223) definiert, die bezüglich der Verschiebungsachse des Gleitstücks (24) geneigt sind,
wobei die Verschiebung der Gleitstücke (24) in den Endabschnitten sicherstellt:
- in einem ersten Verschiebungsbereich (Z'1), eine Schwenkbewegung der beweglichen Platte (112) bezüglich des festen Teils (111), wenn sich der Stift (26) in einem ersten Abschnitt (221) und einem zweiten Abschnitt (222) der ersten Bahn (22) bewegt, und
- in einem zweiten Verschiebungsbereich (Z'2), eine Ausstellbewegung der beweglichen Platte (112), wenn sich der Stift (26) in einem dritten Abschnitt (223) und einem vierten Abschnitt (224) der ersten Bahn (22) bewegt,
**dadurch gekennzeichnet, dass** die erste Bahn (22) an einem ihrer Enden offen ist, so dass sie sich von dem Stift (26) beim Übergang in den dritten Bereich löst, und dadurch, dass der Stift (26) eine Länge aufweist, die größer als diejenige des Stützelements (23) ist.

2. Glasdach nach Anspruch 1, **dadurch gekennzeichnet, dass** jedes der Gleitstücke (24) eine zweite Bahn (25) trägt, die mit dem Stift (26) zusammenwirkt, der mit der beweglichen Platte (112) fest verbunden ist.

3. Glasdach nach Anspruch 2, **dadurch gekennzeichnet, dass** die zweite Bahn (25) im Wesentlichen eine "L"-Form aufweist.

4. Glasdach nach einem der Ansprüche 1 bis 3, **dadurch gekennzeichnet, dass** die Stifte und Stützelemente von einem Flansch (27) getragen werden, der mit der beweglichen Platte (112) in der Nähe eines ersten Endes dieser Letzteren, des sogenannten distalen Endes, entlang der Verschiebungsachse der Gleitstücke (24) verbunden ist.

5. Glasdach nach einem der Ansprüche 1 bis 4, **dadurch gekennzeichnet, dass** die bewegliche Platte (112) in der Nähe ihres zweiten Endes, des sogenannten proximalen Endes, mit Stangenhebeln (31) fest verbunden ist, die es ermöglichen, ergänzend zu den ersten Stiften (26) die Schwenkung der beweglichen Platte (112) zu steuern.

6. Kraftfahrzeug, welches ein Glasdach nach einem der Ansprüche 1 bis 5 umfasst.

## Claims

1. Motor vehicle glazed roof comprising a fixed part (111) and a panel (112) that is mobile relative to the fixed part (111), capable of closing off an aperture (13) formed in or beside said fixed part (111) in a closing-off position,
the moving of said mobile panel (112) being implemented by means of two shuttles (24) respectively guided in translation in two rails (21), each of said shuttles (24) cooperating with a pin (26) that is fixedly attached to said mobile panel (112),
said mobile panel (112) bearing two supporting elements (23) that take support on supporting surfaces (R) formed respectively on a longitudinal portion of said rails (21) defining a third zone of movement in which said mobile panel (112) is moved in sliding relative to said fixed part (111), parallel to the rails (21),
said supporting surface (R) being interrupted in an end portion of each of said rails (21) so as to enable a movement of said supporting elements (23) in a direction perpendicular to said rails (21),
said end portions being provided with a termination part (48) that bears a first track (22) configured so that, when the shuttles (24) are moved in said rails (21), they provide a motion of tilting and/or a motion of swinging of said mobile panel (112),
said first track (22) having an "S" shape defining three portions (221, 222, 223) inclined relative to the axis of movement of said shuttle (24),
the movement of said shuttles (24) in said end portions providing :
- in a first zone of movement (Z'1), for a motion of a tilting of said mobile panel (112) relative to said fixed part (111), when said pin (26) moves in a first portion (221) and a second portion (222) of said first track (22), and
- in a second zone of movement (Z'2), a motion of swinging of said mobile panel (112) when said pin (26) is moved in a third portion (223) and a fourth portion (224) of said first track (22),
**characterized in that** said first track (22) is open at one of its ends, so as to get detached from the pin (26) during the passage into said third zone, and **in that** the pin (26) has a length greater than that of said supporting element (23).

2. Glazed roof according to claim 2, **characterized in that** each of said shuttles (24) bears a second track (25) cooperating with said pin (26) fixedly attached to said mobile panel (112).

3. Glazed roof according to claim 2, **characterized in that** said second track (25) has a general "L" shape.

4. Glazed roof according to any one of the claims 1 to 3, **characterized in that** said pins and supporting elements are carried by a flange (27) connected to said mobile panel (112) in the vicinity of a first end of this panel, called a distal end, along the axis of movement of said shuttles (24).

5. Glazed roof according to any one of the claims 1 to 4, **characterized in that** said mobile panel (112) is fixedly attached, in the vicinity of its second end, called a proximal end, to link rods (31) enabling the control, complementarily to said first pins (26), of the tilting of the mobile panel (112).

6. Motor vehicle comprising a glazed roof according to any one of the claims 1 to 5.
